# EUROPÄISCHE PATENTSCHRIFT

(11) **EP 4 360 913 B1**
(45) Veröffentlichungstag und Bekanntmachung des Hinweises auf die Patenterteilung: **03.12.2025**
(21) Anmeldenummer: 23198966.6
(22) Anmeldetag: 22.09.2023
(51) Int. Cl.: B60C 11/03, B60C 11/13

(54) **FAHRZEUGLUFTREIFEN**
PNEUMATIC TYRE FOR VEHICLES
BANDAGE PNEUMATIQUE POUR VÉHICULE

(30) Priorität: 26.10.2022 DE 102022211347
(43) Veröffentlichungstag der Anmeldung: 01.05.2024
(73) Patentinhaber: Continental Reifen Deutschland GmbH, 30175 Hannover (DE)
(72) Erfinder: Bauer, Claudia, 30165 Hannover (DE); Spechtmeyer, Torben, 30165 Hannover (DE); Kott, Burkhard, 30165 Hannover (DE); Schlittenhard, Jan, 30165 Hannover (DE); Wackerhage, Tanja, 30165 Hannover (DE); Pang-Jian-Xiang, Edwin, 30165 Hannover (DE)
(74) Vertreter: Continental Corporation

(56) Entgegenhaltungen:
- EP-A1- 3 308 981
- EP-B1- 2 501 561
- WO-A1-2022/253372
- DE-A1- 102007 016 930
- DE-A1- 102017 203 225

## Beschreibung

Die Erfindung betrifft einen Fahrzeugluftreifen mit einem Laufstreifen mit zumindest einer schulterseitigen Profilblockreihe mit schulterseitigen Profilblöcken, welche durch in Draufsicht parallel zueinander verlaufende, auf Profiltiefe ausgeführte Schrägrillen voneinander getrennt und laufstreifeninnenseitig jeweils von einer in zwei in Umfangsrichtung aufeinanderfolgenden Schrägrillen einmündenden, in Draufsicht zur Umfangsrichtung gegensinnig zu den Schrägrillen geneigt verlaufenden Rille begrenzt sind, wobei die Rille eine Breite von 3,0 mm bis 7,0 mm, eine maximale Tiefe von 65% bis 100% der Profiltiefe, von der Laufstreifenperipherie ausgehende Rillenwänden und eine in ihrer maximalen Tiefe verlaufende, in die Schrägrillen einmündende, sich in Draufsicht schräg durch die Rille hindurcherstreckende Rillengrundrille aufweist.

Ein derartiger Fahrzeugluftreifen ist beispielsweise aus der EP 2 501 561 B1 bekannt. Der Fahrzeugluftreifen weist beim beschriebenen Ausführungsbeispiel einen Laufstreifen mit einer schulterseitigen Profilblockreihe mit schulterseitigen Profilblöcken auf, wobei jedem schulterseitigen Profilblock ein halbmittiger Profilblock benachbart ist. In Umfangsrichtung aufeinanderfolgende Profilblöcke sind durch Schrägrillen voneinander getrennt, wobei zwischen den Schrägrillen Rillen ausgebildet sind, welche die schulterseitigen Profilblöcke von den halbmittigen Profilblöcken trennen und welche, in Draufsicht betrachtet, gerade, bezüglich der Umfangsrichtung gegensinnig zu den Schrägrillen geneigt sowie zur Umfangsrichtung beispielsweise unter einem Winkel von 20° verlaufen. Die Rillen sind, im Querschnitt betrachtet, durch einen parallel zur Laufstreifenperipherie verlaufenden Rillengrund und zwei in radialer Richtung verlaufende Rillenwände begrenzt. Am Rillengrund jeder Rille ist eine einschnittartige Rillengrundrille mit einer Breite von 0,4 mm bis 1,5 mm ("Nut") ausgebildet, die sich in Draufsicht schräg durch die Rille hindurch erstreckt und die Rille über ihre gesamte Breite quert. Die Rillen weisen eine Breite von beispielsweise 3,0 mm auf eine maximale Tiefe ("Nuttiefe T_{N}") von 10% bis 120% der Profiltiefe auf, wobei die Profiltiefe 8,0 mm bis 10,0 mm beträgt. Bevorzugter Weise ist die maximale Tiefe der Rillen 3,5 mm geringer als die Profiltiefe, sodass die maximale Tiefe der Rillen bei einer Profiltiefe von 8,0 mm zirka 56% der Profiltiefe und bei einer Profiltiefe von 10,0 mm 65% der Profiltiefe beträgt. Der Reifen soll einen geringen Rollwiderstand und ein gleichmäßiges Abriebverhalten aufweisen.

Aus der DE 10 2017 203 225 A1 ist ein Fahrzeugluftreifen mit einem laufrichtungsgebunden ausgeführten Laufstreifen mit über die Breite des Laufstreifens V-förmig zueinander verlaufenden Schrägrillen bekannt. In jeder Laufstreifenhälfte sind zwischen aufeinanderfolgenden Schrägrillen jeweils zumindest zwei gerade, bezüglich der Umfangsrichtung gegensinnig zu den Schrägrillen geneigt verlaufende Rillen ausgebildet, wobei der Winkel, den die Rillen mit der Umfangsrichtung einschließen, mit zunehmender Entfernung von der Reifenäquatorialebene von Rille zu Rille abnimmt, wodurch Vorteile im Hinblick auf das Wasserdrainage- und das Abriebverhalten erzielt werden sollen. Bevorzugter Weise geht vom Rillengrund jeder Rille ein die Rille durchquerender Einschnitt aus, wodurch die Quersteifigkeit des Laufstreifens geringfügig reduziert wird, was sich günstig auf den Fahrkomfort auswirkt.

Die erst nach dem Prioritätsdatum der vorliegenden Anmeldung veröffentlichte WO 2022/253372 A1 beschreibt einen Fahrzeugluftreifen mit einem Laufstreifen mit einer ähnlichen Rille eine Rillengrundrille aufweisend, bei welcher die Schrägflächen der Rillenwänden einen Neigungswinkel zur radialen Richtung bilden, der über die gesamte Längserstreckung der Rille konstant bleibt.

Bei Fahrzeugluftreifen der eingangs genannten Art wirken sich die je eine Rillengrundrille umfassenden Rillen - unter Aufrechterhaltung einer hohen Profilsteifigkeit - günstig auf die Entwässerung des Laufstreifens aus. Die schulterseitigen Profilblöcke weisen an den zwischen den Schrägrillen verlaufenden Rillen Blockkanten auf, welche - bedingt durch die Neigung (Schrägstellung) der Rillen relativ zur Umfangsrichtung - gegenüber Blockkanten, welche exakt in Umfangsrichtung verlaufen, eine längere Kantenlänge aufweisen, sodass die Blockkanten für die Fahreigenschaften unter winterlichen Fahrbedingungen günstige Griffkanten darstellen. Aufgrund der Neigung der Rillen weisen die schulterseitigen Profilblöcke eine sich über ihre Umfangslänge variierende Quersteifigkeit auf, welche zu Einbußen bei den Handlingeigenschaften, insbesondere zu einer verringerten Kraftübertragung vom Reifen auf den Untergrund, führen kann.

Der Erfindung liegt daher die Aufgabe zu Grunde, bei einem Fahrzeugluftreifen der eingangs genannten Art eine Möglichkeit zur Verbesserung der Handlingeigenschaften aufzuzeigen.

Gelöst wird die gestellte Aufgabe erfindungsgemäß dadurch, dass sich die Rillenwände der Rille, im Querschnitt betrachtet, über die gesamte Erstreckung der Rille jeweils aus einer zur radialen Richtung unter einem Winkel von 0° bis 10° verlaufenden, radial äußeren Flankenfläche und einer an diese anschließenden, zur Rillengrundrille verlaufenden und zu dieser abfallenden, zur radialen Richtung unter einem Winkel verlaufenden Schrägfläche zusammensetzen, wobei der Winkel, unter welchem die Schrägfläche der einen Rillenwand verläuft, und der Winkel, unter welchem die Schrägfläche der anderen Rillenwand verläuft, ihre Größen über die Längserstreckung der Rille fortlaufend sowie zueinander entgegengesetzt ändern, wobei der kleinste Wert des Winkels jeder Schrägfläche zumindest der Größe des Winkels der an die jeweilige Schrägfläche anschließenden, radial äußeren Flankenfläche beträgt.

Die Schrägflächen sind daher sich über die Erstreckung der Rille verdrehende Flächen, über welche sich die Quersteifigkeit des jeweiligen schulterseitigen Profilblocks über seine Umfangslänge und damit die Handlingeigenschaften auf besonders vorteilhafte Weise gezielt beeinflussen lassen.

Gemäß einer bevorzugten Ausführung weist die Rille ein laufstreifenaußenseitiges Rillenende und ein laufstreifeninnenseitiges Rillenende auf, wobei der Winkel, unter welchem die Schrägfläche der am jeweiligen schulterseitigen Profilblock ausgebildeten Rillenwand verläuft, seinen größten Wert am laufstreifenaußenseitigen Rillenende aufweist. Dadurch wird der schulterseitige Profilblock an seinem am laufstreifenaußenseitigen Rillenende liegenden, in axialer Richtung schmäleren Bereich stärker als an seinem am laufstreifeninnenseitigen Rillenende liegenden, in axialer Richtung breiteren Bereich abgestützt, wodurch die schulterseitige Profilblock eine besonders gleichmäßige Quersteifigkeit über seine Umfangserstreckung aufweist. Die Handlingeigenschaften sind dadurch weiter verbessert.

Gemäß einer vorteilhaften Weiterentwicklung der zuletzt genannten bevorzugten Ausführung ist der Laufstreifen laufrichtungsgebunden ausgeführt, wobei das laufstreifenaußenseitige Rillenende ein beim Abrollen des Reifens bei Vorwärtsfahrt zuerst in den Untergrund eintretendes, einlaufendes Rillenende und das laufstreifeninnenseitige Rillenende ein auslaufendes Rillenende ist.

Gemäß einer weiteren bevorzugten Ausführung ist vorgesehen, dass die Rillengrundrille, in Draufsicht betrachtet, bezogen auf ihre Rillenmittellinie gerade verläuft. Dies verbessert das Wasserdrainagevermögen in der Rillengrundrille, was für die Handlingeigenschaften auf nasser Fahrbahn günstig ist.

Eine weitere bevorzugte Ausführung ist dadurch gekennzeichnet, dass die Rille und die Rillengrundrille, in Draufsicht betrachtet, bezogen auf ihre Rillenmittellinien gerade verlaufen, wobei die Rillenmittellinie der Rillengrundrille in Umfangsrichtung oder bezüglich der Umfangsrichtung gleichsinnig zur Rillenmittellinie der Rille geneigt verläuft. Dies ist ebenfalls günstig für gute Handlingeigenschaften auf nasser Fahrbahn.

Bei der zuletzt genannten bevorzugten Ausführung besteht eine vorteilhafte Weiterentwicklung darin, dass die Rillengrundrille und die Rille, in Draufsicht betrachtet und bezogen auf ihre Rillenmittellinien, zur Umfangsrichtung jeweils unter einem Winkel verlaufen, wobei der Winkel, unter welchem die Rillengrundrille zur Umfangsrichtung verläuft, kleiner ist, insbesondere um 1° bis 10°, vorzugsweise um 3° bis 5°, kleiner ist, als der Winkel, unter welchem die Rille zur Umfangsrichtung verläuft.

Ferner ist es bei der zuletzt genannten bevorzugten Ausführung vorteilhaft, wenn die Rille, in Draufsicht betrachtet, bezogen auf ihre Rillenmittellinie zur Umfangrichtung unter einem Winkel von 20° bis 40°, insbesondere von 25° bis 35°, verläuft.

Eine weitere bevorzugte Ausführung sieht vor, dass sich die Größen der Winkel der Schrägflächen kontinuierlich, also gleichmäßig, ändern. Dadurch sind die schulterseitigen Profilblöcke auf eine für die Handlingeigenschaften besonders vorteilhafte Weise abgestützt.

Gemäß einer weiteren vorteilhaften Ausführung ist die Rillengrundrille, im in Draufsicht senkrecht zu ihrer Rillenmittellinie verlaufenden Querschnitt betrachtet, durch einen U-förmig verlaufenden Rillengrund mit je einer Mündungskante an jeder Schrägrille begrenzt, wobei vorzugsweise die Rillenwände an jener Stelle, an welcher die Schrägflächen den kleinsten Wert ihres Winkels aufweisen, von einer tangential an die Mündungskante des Rillengrunds knickfrei anschließenden, insbesondere gerade verlaufenden, Mündungskante begrenzt sind. Dies ist vor allem für die Handlingeigenschaften auf nasser Fahrbahn von weiterem Vorteil.

Bevorzugter Weise stimmen jeweils die größten Werte und jeweils die kleinsten Werte der Winkel der Schrägflächen überein. Dadurch ist die Quersteifigkeit des jeweiligen schulterseitigen Profilblocks auf besonders gleichmäßige Weise erhöht. Steifigkeitssprünge zum jeweils benachbarten Profilpositiv werden somit zuverlässig vermieden bzw. verringert, was ebenfalls für die Handlingeigenschaften vorteilhaft ist.

Gemäß einer weiteren bevorzugten Ausführung weist die Rillengrundrille an den radial inneren Enden der Schrägflächen zwei in Draufsicht gerade, sowie in einem in radialer Richtung ermittelten konstanten Abstand zum Niveau der Profiltiefe verlaufende Begrenzungskanten auf.

Bei der letztgenannten bevorzugten Ausführung ist es von Vorteil, wenn die Rillengrundrille eine in Draufsicht senkrecht zu ihrer Rillenmittelinie sowie zwischen den Begrenzungskanten ermittelte konstante Breite von 15% bis 35%, insbesondere von 20% bis 30%, der Breite der Rille aufweist. Dadurch können sich unter Belastung die an die Rille, welche die Rillengrundrille umfasst, angrenzenden Profilpositive, zu welchen die schulterseitigen Profilblöcke gehören, auf für die Handlingeigenschaften vorteilhafte Weise aneinander abstützen.

Ferner ist es bei letztgenannten bevorzugten Ausführung günstig, wenn die Rillengrundrille eine auf die Begrenzungskanten bezogene, in radialer Richtung ermittelte konstante Tiefe von 0,30 mm bis 1,50 mm, insbesondere von bis zu 1,00 mm, bevorzugt von bis zu 0,75 mm, aufweist. Dies ist ebenfalls für die Handlingeigenschaften auf nasser Fahrbahn günstig.

Eine weitere vorteilhafte Ausführung ist dadurch gekennzeichnet, dass die radial äußeren Flankenflächen, in einer in radialer Richtung ermittelten konstanten Tiefe von 60% bis 75% der maximalen Tiefe der Rille an die Schrägflächen anschließen. Dies trägt zur Aufrechterhaltung eines für die Wasserdrainage vorteilhaft großen Rillenquerschnitts bei und verbessert die versteifende Wirkung der Schrägflächen, welche in eine mit der erwähnten Tiefe korrelierende in radialer Richtung ermittelte Höhe reichen. Es sind somit die Handlingeigenschaften - sowohl auf trockener als auch auf nasser Fahrbahn - weiter verbessert.

Für die Handlingeigenschaften auf trockener Fahrbahn ist es ferner vorteilhaft, wenn die Rille - in Draufsicht betrachtet und jeweils bezogen auf einen mittig auf ihrer Rillenmittellinie liegenden Punkt - zum nächstliegenden seitlichen Rand der Bodenaufstandsfläche einen an der Laufstreifenperipherie in axialer Richtung ermittelten Abstand von 7% bis 30%, insbesondere von 12% bis 25%, bevorzugt von 17% bis 23%, der Breite der Bodenaufstandsfläche des Laufstreifens aufweist. In der Folge sind die schulterseitigen Profilblöcke in axialer Richtung entsprechend breit ausgeführt, was für die Handlingeigenschaften auf trockener Fahrbahn günstig ist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen in die Ebene abgewickelten Umfangsabschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2 und
Fig. 4 eine Schrägansicht gemäß der in Fig. 2 durch den Pfeil S₄ angedeuteten Sichtrichtung.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem ganzzahligen Felgendurchmesser von 13 Zoll bis 24 Zoll, insbesondere von 18 Zoll bis 23 Zoll.

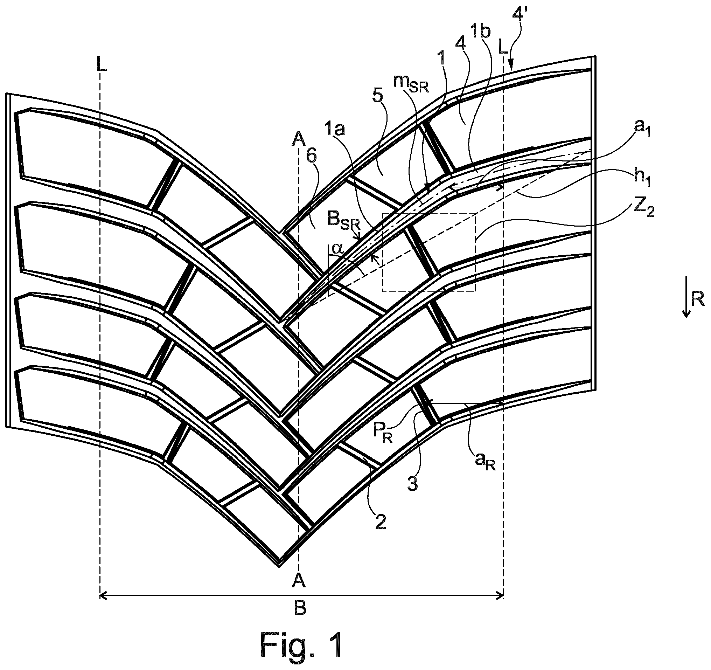

Fig. 1 zeigt eine Draufsicht auf einen Laufstreifen eines Fahrzeugluftreifens. Die Reifenäquatorialebene ist durch eine Linie A-A und die seitlichen Ränder der Bodenaufstandsfläche des Laufstreifens sind durch zwei Linien L gekennzeichnet. Die Bodenaufstandsfläche entspricht dem statisch ermittelten Footprint (ermittelt mit einem auf einer Normfelge montierten Reifen, Last bei 70 % der maximalen Tragfähigkeit, Innendruck 85 % des Normdrucks, gemäß ETRTO-Standards) und weist in axialer Richtung eine Breite B auf. Der Laufstreifen 1 weist eine laufrichtungsgebundene Profilierung auf und ist derart am Fahrzeug zu montieren, dass er die durch den Pfeil R angedeutete Abrollrichtung bei Vorwärtsfahrt aufweist.

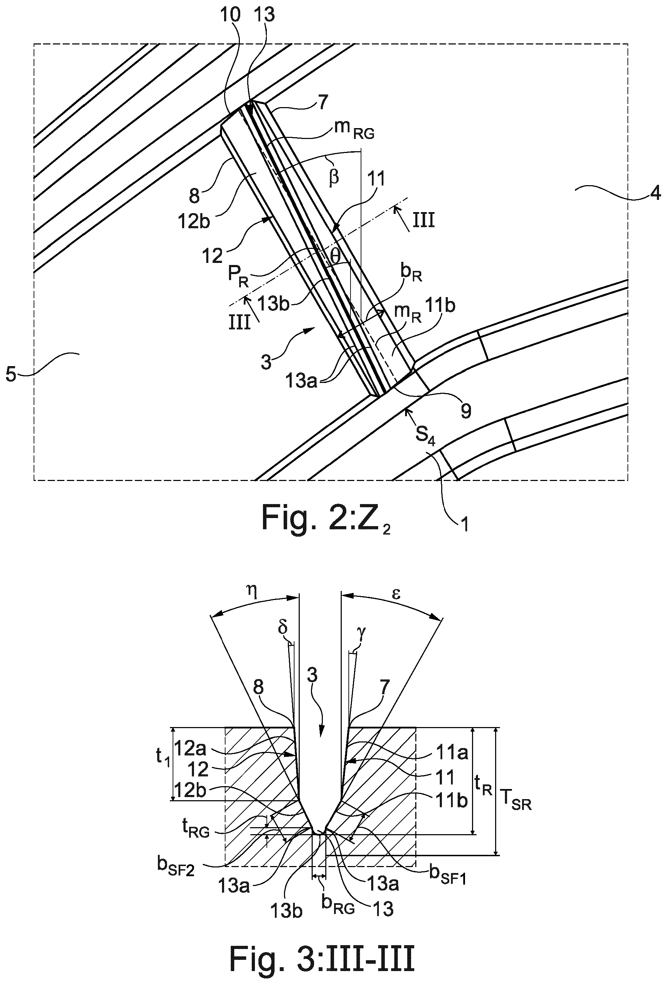

Der Laufstreifen ist mit in Draufsicht über die Laufstreifenbreite V- förmig zueinander verlaufenden, die Haupt(entwässerungs)rillen des Laufstreifens bildenden Schrägrillen 1 versehen, wobei die Abrollrichtung des Reifens bei Vorwärtsfahrt (Pfeil R) derart ist, dass die Schrägrillen 1 zuerst mit ihren laufstreifeninnenseitigen Enden in die Bodenaufstandsfläche eintreten. Die zu dem einen Laufstreifenrand verlaufenden Schrägrillen 1 sind zu den zum anderen Laufstreifenrand verlaufenden Schrägrillen 1 in Umfangsrichtung versetzt ausgebildet, wobei die Schrägrillen 1 über die Reifenäquatorialebene (Linie A-A) hinausverlaufen und jeweils in eine zum anderen seitlichen Rand des Laufstreifens verlaufende Schrägrille 1 einmünden. Die Schrägrillen 1 weisen jeweils eine in Draufsicht dem Rillenverlauf folgende Rillenmittellinie m_{SR} auf, sind in radialer Richtung auf die jeweils vorgesehene Profiltiefe T_{SR} (in Fig. 3 angedeutet) von üblicherweise 6,5 mm bis 12,0 mm ausgeführt, weisen eine in Draufsicht senkrecht zur Rillenmittellinie m_{SR} an der Laufstreifenperipherie gemessene, in Richtung Laufstreifenrand fortlaufend zunehmende Breite B_{SR} von 2,5 mm bis 14,0 mm, insbesondere von 3,0 mm bis 10,0 mm, auf und verlaufen - in Draufsicht betrachtet und bezogen auf eine die Enden der zugehörigen Rillenmittellinie m_{SR} verbindende gerade Hilfslinie h₁ - zur Umfangsrichtung unter einem Winkel α von 50° bis 70°, wobei die zum selben Laufstreifenrand verlaufenden Schrägrillen 1, bezogen auf die Rillenmittellinien m_{SR}, jeweils parallel zueinander verlaufen. Die Breite B_{SR} ist senkrecht zu einer an die Rillenmittellinie m_{SR} angelegten Tangente (nicht eingezeichnet) ermittelt. Bevorzugter Weise beträgt die Breite B_{SR} an der innerhalb der Bodenaufstandsfläche vorliegenden breitesten Stelle zumindest 3,5 mm.

Die Schrägrillen 1 setzen sich beim gezeigten Ausführungsbeispiel jeweils aus einem in Draufsicht durchgehend gebogen verlaufenden, laufstreifeninnenseitigen Rillenabschnitt 1a und einem zur Umfangsrichtung gegenüber dem laufstreifeninnenseitigen Rillenabschnitt 1a stärker geneigt verlaufenden, schulterseitigen Rillenabschnitt 1b zusammen. Der laufstreifeninnenseitige Rillenabschnitte 1a endet laufstreifenaußenseitig, bezogen auf die jeweilige Rillenmittellinie m_{SR}, vor dem seitlichen Rand der Bodenaufstandsfläche (Linie L) in einem in axialer Richtung ermittelten Abstand a₁ von 8% bis 25% der Breite B der Bodenaufstandsfläche.

In jeder Laufstreifenhälfte verlaufen zwischen in Umfangsrichtung benachbarten Schrägrillen 1 eine weiter laufstreifeninnenseitig ausgebildete Rille 2 und eine weiter laufstreifenaußenseitig ausgebildete Rille 3. Die Rillen 2 münden in die jeweiligen laufstreifeninnenseitigen Rillenabschnitte 1a ein, verlaufen, in Draufsicht betrachtet, gerade sowie bezüglich der Umfangsrichtung gegensinnig zu den Schrägrillen 1 geneigt, weisen eine in Draufsicht senkrecht zu ihrer Erstreckungsrichtung ermittelte Breite von 1,0 mm bis 6,0 mm, insbesondere von zumindest 2,5 mm, und in radialer Richtung eine maximale Tiefe (Tiefe an der tiefsten Stelle) von 70% bis 100% der Profiltiefe T_{SR} (Fig. 3) auf. Die Rillen 3 verlaufen entweder zwischen zwei laufstreifeninnenseitigen Rillenabschnitten 1a, zwischen einem laufstreifeninnenseitigen Rillenabschnitt 1a und einem schulterseitigen Rillenabschnitt 1b oder - bei einer weiteren nicht gezeigten Variante - zwischen zwei schulterseitigen Rillenabschnitten 1b.

Der Laufstreifen weist durch die beschriebene Profilierung in jeder Laufstreifenhälfte zu schulterseitigen Profilblockreihen 4' gehörende schulterseitige Profilblöcke 4, zu diesen benachbarte halbmittige Profilblöcke 5 und von der Reifenäquatorialebene (Linie A-A) geschnittene, mittige Profilblöcke 6 auf. Die Profilblöcke 4, 5, 6 sind vorzugsweise jeweils mit in Fig. 1 nicht gezeigten Einschnitten mit einer Breite von 0,4 mm bis 1,2 mm und einer maximalen Tiefe (Tiefe an der tiefsten Stelle) von 70% bis 100% der Profiltiefe T_{SR} (Fig. 3) versehen.

Die weitere Ausgestaltung der weiter laufstreifenaußenseitig ausgebildeten Rillen 3 wird nachfolgend anhand einer einzelnen Rille 3 weiter erläutert.

Gemäß Fig. 2 ist die Rille 3 an der Laufstreifenperipherie durch zwei in Draufsicht gerade und parallel zueinander verlaufende Rillenkanten 7, 8 - eine am jeweiligen schulterseitigen Profilblock 4 ausgebildete Rillenkante 7 und eine am jeweiligen halbmittigen Profilblock 5 ausgebildete Rillenkante 8 - begrenzt, wobei die Rille 3, in Draufsicht betrachtet, eine dem Rillenverlauf folgende, übereinstimmend zu den Rillenkanten 7, 8 beabstandete Rillenmittellinie m_{R} aufweist und ferner gerade, bezüglich der Umfangsrichtung gegensinnig zu den Schrägrillen 1 geneigt sowie bezogen auf die Rillenmittellinie m_{R} zur Umfangrichtung unter einem Winkel β von 20° bis 40°, insbesondere von 25° bis 35°, verläuft. Die Rille 3 weist ein an der einen angrenzenden Schrägrille 1 liegendes, beim Abrollen des Reifens bei Vorwärtsfahrt zuerst in den Untergrund eintretendes, weiter laufstreifenaußenseitig befindliches, einlaufendes Rillenende 9 und ein an der anderen angrenzenden Schrägrille 1 liegendes, weiter laufstreifeninnenseitig befindliches, auslaufendes Rillenende 10 auf. Das Rillenende 9 weist - gegenüber dem Rillenende 10 - zur Reifenäquatorialebene (Linie A-A, Fig. 1) einen größeren in axialer Richtung ermittelten, auf das jeweilige Ende der Rillenmittellinie m_{R} bezogenen Abstand auf. Die Rille 3 weist ferner eine in Draufsicht senkrecht zur Rillenmittlinie m_{R} sowie zwischen den Rillenkanten 7, 8 ermittelte konstante Breite b_{R} von 3,0 mm bis 7,0 mm, insbesondere von 4,0 mm bis 6,0 mm, eine in radialer Richtung ermittelte, konstante, maximale Tiefe t_{R} (Tiefe an der tiefsten Stelle, Fig. 3) von 65% bis 100%, insbesondere von zumindest 70%, der Profiltiefe T_{SR} (Fig. 3) und - in Draufsicht betrachtet und jeweils bezogen auf einen mittig auf ihrer Rillenmittellinie m_{R} liegenden Punkt P_{R} - zum nächstliegenden seitlichen Rand der Bodenaufstandsfläche (Fig. 1: rechte Linie L) einen an der Laufstreifenperipherie in axialer Richtung ermittelten Abstand a_{R} (Fig. 1) von 7% bis 30%, insbesondere von 12% bis 25%, bevorzugt von 17% bis 23%, der Breite B (Fig. 1) der Bodenaufstandsfläche auf. Die Tiefe t_{R} (Fig. 3) beträgt vorzugsweise höchstens der um 1,0 mm, besonders bevorzugt der um 1,5 mm bis 2,0 mm, verringerten Profiltiefe T_{SR} (Fig. 3).

Wie Fig. 2 bis Fig. 4 insbesondere in Kombination miteinander zeigen, ist die Rille 3 durch eine an die Rillenkante 7 anschließende Rillenwand 11, eine an die Rillenkante 8 anschließende Rillenwand 12 und eine sich in Draufsicht (Fig. 2) schräg durch die Rille 3 hindurcherstreckende, in die Schrägrillen 1 einmündende (Fig. 2, Fig. 3), den Rillengrund bildende, gerade verlaufende Rillengrundrille 13 begrenzt.

Gemäß Fig. 3 setzen sich die Rillenwände 11, 12, im in Draufsicht senkrecht zur Rillenmittellinie m_{R} verlaufenden Querschnitt betrachtet (vergl. Lage der Linie III-III in Fig. 2), jeweils aus einer an die Rillenkante 7 (Rillenwand 11), 8 (Rillenwand 12) anschließenden, radial äußeren Flankenfläche 11a (Rillenwand 11), 12a (Rillenwand 12) und einer zur Rillengrundrille 13 verlaufenden und zu dieser abfallenden, radial inneren Schrägfläche 11b (Rillenwand 11), 12b (Rillenwand 12) zusammen.

Die radial äußeren Flankenflächen 11a, 12a verlaufen, im erwähnten Querschnitt betrachtet, gerade sowie zur radialen Richtung unter einem konstanten Winkel γ (Flankenfläche 11a), δ (Flankenfläche 12a) von jeweils 0° bis 10°, insbesondere von jeweils 2° bis 8°, wobei der Winkel γ vorzugsweise um 1° bis 4° größer ist als der Winkel δ. Die radial äußeren Flankenflächen 11a, 12a schließen in einer in radialer Richtung ermittelten konstanten Tiefe t₁ von 60% bis 75% der maximalen Tiefe t_{R} der Rille 3 an die jeweilige Schrägfläche 11b, 12b an.

Die radial inneren Schrägflächen 11b, 12b erscheinen, in jedem in Draufsicht senkrecht zur Rillenmittellinie m_{R} verlaufenden Querschnitt betrachtet, als gerade Linien, welche zur radialen Richtung unter einem Winkel ε (Schrägfläche 11b), η (Schrägfläche 12b) verlaufen und weisen, im erwähnten Querschnitt betrachtet, eine Breite b_{SF1} (Schrägfläche 11b), b_{SF2} (Schrägfläche 12b) auf. Die Größe der Winkel ε, η und die Größe der Breiten b_{SF1}, b_{SF2} sind auf spezielle Weise auf die Ausgestaltung der Rillengrundrille 13 abgestimmt. Nachfolgend wird zunächst die Ausgestaltung der Rillengrundrille 13 und anschließend auf die Winkel ε, η und die Breiten b_{SF1}, b_{SF2} eingegangen.

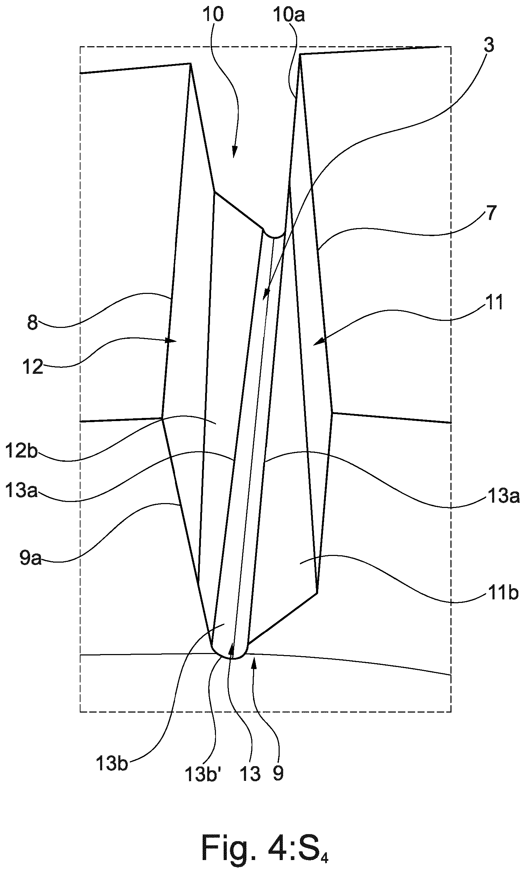

Gemäß Fig. 2 bis Fig. 4 reicht die Rillengrundrille 13 über ihre gesamte in Draufsicht vorliegende Längserstreckung auf die bereits erwähnte, maximale Tiefe t_{R} (Fig. 3) der Rille 3. Die Rillengrundrille 13 weist an den radial inneren Enden der Schrägflächen 11b, 12b zwei Begrenzungskanten 13a auf, welche - wie Fig. 2 zeigt - in Draufsicht betrachtet, gerade und parallel zueinander und - wie in Fig. 3 insbesondere in Verbindung mit Fig. 4 zeigt - in einem in radialer Richtung ermittelten konstanten Abstand (nicht beziffert) zum Niveau der Profiltiefe T_{SR} (Fig. 3) und in einem in radialer Richtung ermittelten konstanten Abstand (nicht beziffert) zum Niveau der maximalen Tiefe t_{R} (Fig. 3) verlaufen. Die Rillengrundrille 13 weist ferner eine in Draufsicht ihrem Verlauf folgende, übereinstimmend zu den Begrenzungskanten 13a beabstandete Rillenmittellinie m_{RG} (Fig. 2) auf, welche bezüglich der Umfangsrichtung gleichsinnig zur Rillenmittellinie m_{R} der Rille 3 geneigt ist, und verläuft - bezogen auf die Rillenmittellinie m_{RG} - zur Umfangsrichtung unter einem Winkel θ, welcher kleiner ist als der erwähnte Winkel β der Rille 3. Bevorzugter Weise ist der Winkel θ um 1° bis 10°, vorzugsweise um 3° bis 5°, kleiner als der Winkel β. Die Rillengrundrille 13 ist durch einen zwischen den Schrägflächen 11b, 12b, also zwischen den Begrenzungskanten 13a, verlaufenden Rillengrund 13b begrenzt, welcher gemäß Fig. 3, im in Draufsicht senkrecht zur Rillenmittellinie m_{RG} verlaufenden Querschnitt betrachtet (vergl. Lage der Linie III-III in Fig. 2), U-förmig sowie symmetrisch bezüglich der Rillenmittellinie m_{RG} (Fig. 2) ausgeführt ist und an jeder Schrägrille 1 eine durchgehend gebogen verlaufende Mündungskante 13b' aufweist (Fig. 4).

Die Rillengrundrille 13 weist ferner eine in Draufsicht senkrecht zu Rillenmittellinie m_{RG} sowie zwischen den Begrenzungskanten 13a ermittelte konstante Breite b_{RG} (Fig. 3) von 15% bis 35%, insbesondere von 20% bis 30%, der Breite b_{R} (Fig. 2) der Rille 3 und eine auf die Begrenzungskanten 13a bezogene, in radialer Richtung ermittelte konstante Tiefe t_{RG} (Fig. 3) von 0,30 mm bis 1,50 mm, bevorzugt bis zu 1,00 mm, besonders bevorzugt bis zu 0,75 mm auf.

Wie Fig. 2 bis Fig. 4 miteinander zeigen, ändern die Winkel ε, η (Fig. 3) und die Breiten b_{SF1}, b_{SF2} (Fig. 3) ihre Größen über die in Draufsicht vorliegende Längserstreckung der Rille 3, und damit gleichzeitig über in Draufsicht vorliegende Längserstreckung der Rillengrundrille 13, fortlaufend, insbesondere kontinuierlich (also gleichmäßig), wobei sich die zur Schrägfläche 11b gehörenden Parameter (Winkel ε, Breite b_{SF1}) entgegengesetzt zu den zur Schrägfläche 12b gehörenden Parameter (Winkel η, Breite b_{SF2}) ändern. Je größer der jeweilige Winkel ε, η ist, desto größer ist auch die zu selben Schrägfläche 11b, 12b gehörende Breite b_{SF1}, b_{SF2}. Die Schrägflächen 11b, 12b sind daher sich über ihre Längserstreckung fortlaufend verdrehend und sich mit abnehmenden Winkel ε, η im Querschnitt fortlaufend verkürzende Flächen. Am einlaufenden Rillenende 9 (Fig. 2, Fig. 4) weist der Winkel ε (Fig. 3) seinen größten Wert (Fig. 2, Fig. 4), die Breite b_{SF1} (Fig. 3) ihren größeren Wert, der Winkel η (Fig. 3) seinen kleinsten Wert (Fig. 2, Fig. 4) und die Breite b_{SF2} (Fig. 3) ihren kleinsten Wert (Fig. 2, Fig. 4) auf. Am auslaufenden Rillenende 10 (Fig. 2, Fig. 4) weist der Winkel ε (Fig. 3) seinen kleinsten Wert (Fig. 2, Fig. 4), die Breite b_{SF1} (Fig. 3) ihren kleinsten Wert (Fig. 2, Fig. 4), der Winkel η (Fig. 3) seinen größten Wert (Fig. 2, Fig. 4) und die Breite b_{SF2} ihren größten Wert auf.

Bevorzugter Weise ist die radial innere Schrägfläche 12b derart ausgeführt, dass der am einlaufenden Rillenende 9 (Fig. 2, Fig. 4) vorliegende kleinste Wert des Winkels η (Fig. 3) mit dem konstanten Winkel δ (Fig. 3) der radial äußeren Flankenfläche 12a übereinstimmt, sodass die radial innere Schrägfläche 12b und die radial äußere Flankenfläche 12a am einlaufenden Rillenende 9 (Fig. 2, Fig. 4) gemeinsam von einer knickfreien, insbesondere gerade verlaufenden, Mündungskante 9a (Fig. 4) begrenzt sind.

Ferner ist es bevorzugt, wenn die radial innere Schrägfläche 11b derart ausgeführt ist, dass der am auslaufenden Rillenende 10 (Fig. 2, Fig. 4) vorliegende kleinste Wert des Winkels ε (Fig. 3) mit dem konstanten Winkel γ (Fig. 3) der radial äußeren Flankenfläche 11a übereinstimmt, sodass die radial innere Schrägfläche 11b und die radial äußere Flankenfläche 11a am auslaufenden Rillenende 10 (Fig. 2, Fig. 4) gemeinsam von einer knickfreien, insbesondere gerade verlaufenden, Mündungskante 10a (Fig. 4) begrenzt sind.

Besonders bevorzugter Weise schließen die Mündungskante 9a, 10a jeweils tangential an die jeweilige Mündungskante 13b' (Fig. 4) des Rillengrunds 13b der Rillengrundrille 13 an (Fig. 4, gezeigt für Mündungskante 9a).

Die Erfindung ist auf das beschriebene Ausführungsbeispiel nicht beschränkt.

Der Laufstreifen muss nicht laufrichtungsgebunden ausgeführt sein. Die Schrägrillen können durchgehend gebogen oder gerade verlaufen. Es ist zumindest eine schulterseitige Profilblockreihe vorgesehen, deren schulterseitige Profilblöcke von Rillen mit entsprechenden Schrägflächen und Rillengrundrillen begrenzt sind.

Die die schulterseitigen Profilblöcke laufstreifeninnenseitig begrenzenden Rillen trennen die schulterseitigen Profilblöcke von einem Profilblock oder einer blockartigen Profilpositivstruktur. Vorzugsweise trennen die Rillen je einen schulterseitigen Profilblock von einem halbmittigen Profilblock, wie beim Ausführungsbeispiel erläutert. Im Bereich der Reifenäquatorialebene kann bzw. können anstelle der mittigen Profilblöcke eine oder mehrere in Umfangsrichtung umlaufende Profilrippe(n) vorgesehen sein.

Der kleinste Wert der Winkel ε, η der Schrägflächen 11b, 12b beträgt zumindest der Größe des Winkels γ, δ der jeweils anschließenden radial äußeren Flankenfläche 11a, 12a.

### Bezugszeichenliste

- 1: Schrägrille
- 1a: Iaufstreifeninnenseitiger Rillenabschnitt
- 1b: schulterseitiger Rillenabschnitt
- 2: Rille
- 3: Rille
- 4: schulterseitiger Profilblock
- 4': schulterseitige Profilblockreihe
- 5: halbmittiger Profilblock
- 6: mittiger Profilblock
- 7: Rillenkante
- 8: Rillenkante
- 9: einlaufendes Rillenende
- 9a: Mündungskante
- 10: auslaufendes Rillenende
- 10a: Mündungskante
- 11: Rillenwand
- 11a: radial äußere Flankenfläche
- 11b: radial innere Schrägfläche
- 12: Rillenwand
- 12a: radial äußere Flankenfläche
- 12b: radial innere Schrägfläche
- 13: Rillengrundrille
- 13a: Begrenzungskante
- 13b: Rillengrund
- 13b': Mündungskante
- A-A: Linie (Reifenäquatorialebene)
- a₁, a_{R}: Abstand
- B, b_{R}, b_{RG}, b_{SF1}, b_{SF2}, B_{SR}: Breite
- h₁: Hilfslinie
- L: Linie (seitlicher Rand der Bodenaufstandsfläche)
- m_{R}, m_{RG}, m_{SR}: Rillenmittellinie
- P_{R}: Punkt
- R: Pfeil (Abrollrichtung)
- S₄: Pfeil (Sichtrichtung)
- t1, t_{RG}: Tiefe
- t_{R}: maximale Tiefe
- T_{SR}: Profiltiefe
- Z₂: Detail
- α, β, γ, δ, ε, η, θ: Winkel

## Patentansprüche

1. Fahrzeugluftreifen mit einem Laufstreifen mit zumindest einer schulterseitigen Profilblockreihe (4') mit schulterseitigen Profilblöcken (4), welche durch in Draufsicht parallel zueinander verlaufende, auf Profiltiefe (T_{SR}) ausgeführte Schrägrillen (1) voneinander getrennt und laufstreifeninnenseitig jeweils von einer in zwei in Umfangsrichtung aufeinanderfolgenden Schrägrillen (1) einmündenden, in Draufsicht zur Umfangsrichtung gegensinnig zu den Schrägrillen (1) geneigt verlaufenden Rille (3) begrenzt sind, wobei die Rille (3) eine Breite (b_{R}) von 3,0 mm bis 7,0 mm, eine maximale Tiefe (t_{R}) von 65% bis 100% der Profiltiefe (T_{SR}), von der Laufstreifenperipherie ausgehende Rillenwänden (11, 12) und eine in ihrer maximalen Tiefe (t_{R}) verlaufende, in die Schrägrillen (1) einmündende, sich in Draufsicht schräg durch die Rille (3) hindurcherstreckende Rillengrundrille (13) aufweist,
**dadurch gekennzeichnet,**
**dass** sich die Rillenwände (11, 12) der Rille (3), im Querschnitt betrachtet, über die gesamte Erstreckung der Rille (3) jeweils aus einer zur radialen Richtung unter einem Winkel (γ, δ) von 0° bis 10° verlaufenden, radial äußeren Flankenfläche (11a, 12a) und einer an diese anschließenden, zur Rillengrundrille (13) verlaufenden und zu dieser abfallenden, zur radialen Richtung unter einem Winkel (ε, η) verlaufenden Schrägfläche (11b, 12b) zusammensetzen, wobei der Winkel (ε), unter welchem die Schrägfläche (11b) der einen Rillenwand (11) verläuft, und der Winkel (η), unter welchem die Schrägfläche (12b) der anderen Rillenwand (12) verläuft, ihre Größen über die Längserstreckung der Rille (3) fortlaufend sowie zueinander entgegengesetzt ändern, wobei der kleinste Wert des Winkels (ε, η) jeder Schrägfläche (11b, 12b) zumindest der Größe des Winkels (γ, δ) der an die jeweilige Schrägfläche (11b, 12b) anschließenden, radial äußeren Flankenfläche (11a, 12a) beträgt.

2. Fahrzeugluftreifen nach Anspruch 1, **dadurch gekennzeichnet, dass** die Rille (3) ein laufstreifenaußenseitiges Rillenende (9) und ein laufstreifeninnenseitiges Rillenende (10) aufweist, wobei der Winkel (ε), unter welchem die Schrägfläche (11b) der am jeweiligen schulterseitigen Profilblock (4) ausgebildeten Rillenwand (11) verläuft, seinen größten Wert am laufstreifenaußenseitigen Rillenende (9) aufweist.

3. Fahrzeugluftreifen nach Anspruch 2, **dadurch gekennzeichnet, dass** der Laufstreifen laufrichtungsgebunden ausgeführt ist, wobei das laufstreifenaußenseitige Rillenende (9) ein beim Abrollen des Reifens bei Vorwärtsfahrt (Pfeil R) zuerst in den Untergrund eintretendes, einlaufendes Rillenende (9) und das laufstreifeninnenseitige Rillenende (10) ein auslaufendes Rillenende (10) ist.

4. Fahrzeugluftreifen nach einem der Ansprüche 1 bis 3, **dadurch gekennzeichnet, dass** die Rillengrundrille (13), in Draufsicht betrachtet, bezogen auf ihre Rillenmittellinie (m_{RG}) gerade verläuft.

5. Fahrzeugluftreifen nach einem der Ansprüche 1 bis 4, **dadurch gekennzeichnet, dass** die Rille (3) und die Rillengrundrille (13), in Draufsicht betrachtet, bezogen auf ihre Rillenmittellinien (m_{R}, m_{RG}) gerade verlaufen, wobei die Rillenmittellinie (m_{RG}) der Rillengrundrille (13) in Umfangsrichtung oder bezüglich der Umfangsrichtung gleichsinnig zur Rillenmittellinie (m_{R}) der Rille (3) geneigt verläuft.

6. Fahrzeugluftreifen nach Anspruch 5, **dadurch gekennzeichnet, dass** die Rillengrundrille (13) und die Rille (3), in Draufsicht betrachtet und bezogen auf ihre Rillenmittellinien (m_{RG}, m_{R}), zur Umfangsrichtung jeweils unter einem Winkel (β, θ) verlaufen, wobei der Winkel (θ), unter welchem die Rillengrundrille (13) zur Umfangsrichtung verläuft, kleiner ist, insbesondere um 1° bis 10°, vorzugsweise um 3° bis 5°, kleiner ist, als der Winkel (β), unter welchem die Rille (3) zur Umfangsrichtung verläuft.

7. Fahrzeugluftreifen nach Anspruch 5 oder 6, **dadurch gekennzeichnet, dass** die Rille (3), in Draufsicht betrachtet, bezogen auf ihre Rillenmittellinie (m_{R}) zur Umfangrichtung unter einem Winkel (β) von 20° bis 40°, insbesondere von 25° bis 35°, verläuft.

8. Fahrzeugluftreifen nach einem der Ansprüche 1 bis 7, **dadurch gekennzeichnet, dass** sich die Größen der Winkel (ε, η) der Schrägflächen (11b, 12b) kontinuierlich, also gleichmäßig, ändern.

9. Fahrzeugluftreifen nach einem der Ansprüche 1 bis 8, **dadurch gekennzeichnet, dass** die Rillengrundrille (13), im in Draufsicht senkrecht zu ihrer Rillenmittellinie (m_{RG}) verlaufenden Querschnitt betrachtet, durch einen U-förmig verlaufenden Rillengrund (13b) mit je einer Mündungskante (13b') an jeder Schrägrille (1) begrenzt ist, wobei vorzugsweise die Rillenwände (11, 12) an jener Stelle, an welcher die Schrägflächen (11b, 12b) den kleinsten Wert ihres Winkels (ε, η) aufweisen, von einer tangential an die Mündungskante (13b') des Rillengrunds (13b) knickfrei anschließenden, insbesondere gerade verlaufenden, Mündungskante (9a, 10a) begrenzt sind.

10. Fahrzeugluftreifen nach einem der Ansprüche 1 bis 9, **dadurch gekennzeichnet, dass** jeweils die größten Werte und jeweils die kleinsten Werte der Winkel (ε, η) der Schrägflächen (11b, 12b) übereinstimmen.

11. Fahrzeugluftreifen nach einem der Ansprüche 1 bis 10, **dadurch gekennzeichnet, dass** die Rillengrundrille (13) an den radial inneren Enden der Schrägflächen (11b, 12b) zwei in Draufsicht gerade, sowie in einem in radialer Richtung ermittelten konstanten Abstand zum Niveau der Profiltiefe (T_{SR}) verlaufende Begrenzungskanten (13a) aufweist.

12. Fahrzeugluftreifen nach Anspruch 11, **dadurch gekennzeichnet, dass** die Rillengrundrille (13) eine in Draufsicht senkrecht zu ihrer Rillenmittelinie (m_{RG}) sowie zwischen den Begrenzungskanten (13a) ermittelte konstante Breite (b_{RG}) von 15% bis 35%, insbesondere von 20% bis 30%, der Breite (b_{R}) der Rille (3) aufweist.

13. Fahrzeugluftreifen nach Anspruch 11 oder 12, **dadurch gekennzeichnet, dass** die Rillengrundrille (13) eine auf die Begrenzungskanten (13a) bezogene, in radialer Richtung ermittelte konstante Tiefe (t_{RG}) von 0,30 mm bis 1,50 mm, insbesondere von bis zu 1,00 mm, bevorzugt von bis zu 0,75 mm, aufweist.

14. Fahrzeugluftreifen nach einem der Ansprüche 1 bis 13, **dadurch gekennzeichnet, dass** die radial äußeren Flankenflächen (11a, 12a), in einer in radialer Richtung ermittelten konstanten Tiefe (t₁) von 60% bis 75% der maximalen Tiefe (t_{R}) der Rille (3) an die Schrägflächen (11b, 12b) anschließen.

15. Fahrzeugluftreifen nach einem der Ansprüche 1 bis 14, **dadurch gekennzeichnet, dass** die Rille (3) - in Draufsicht betrachtet und jeweils bezogen auf einen mittig auf ihrer Rillenmittellinie (m_{R}) liegenden Punkt (P_{R}) - zum nächstliegenden seitlichen Rand der Bodenaufstandsfläche (Linie L) einen an der Laufstreifenperipherie in axialer Richtung ermittelten Abstand (a_{R}) von 7% bis 30%, insbesondere von 12% bis 25%, bevorzugt von 17% bis 23%, der Breite (B) der Bodenaufstandsfläche des Laufstreifens aufweist.

## Claims

1. Pneumatic vehicle tyre having a tread with at least one shoulder-side profile-block row (4') with shoulder-side profile blocks (4) which are separated from one another by oblique channels (1) extending parallel to one another in plan view and formed to a profile depth (T_{SR}) and which, at the tread inner side, are in each case delimited by a channel (3) opening out into two circumferentially successive oblique channels (1) and, in plan view, extending in an inclined manner in the opposite direction to the oblique channels (1) in relation to the circumferential direction, wherein the channel (3) has a width (b_{R}) of 3.0 mm to 7.0 mm, a maximum depth (t_{R}) of 65% to 100% of the profile depth (T_{SR}), channel walls (11, 12) proceeding from the tread periphery, and a channel-base channel (13) extending at its maximum depth (t_{R}) and opening out into the oblique channels (1) and, in plan view, extending obliquely through the channel (3),
**characterized**
**in that** the channel walls (11, 12) of the channel (3), when seen in cross section, are, over the entire extent of the channel (3), made up in each case of a radially outer flank surface (11a, 12a), which extends at an angle (γ, δ) of 0° to 10° to the radial direction, and an oblique surface (11b, 12b), which adjoins said radially outer flank surface and extends to the channel-base channel (13) and descends in relation to the latter and extends at an angle (ε, η) to the radial direction, wherein the angle (ε) at which the oblique surface (11b) of one channel wall (11) extends and the angle (η) at which the oblique surface (12b) of the other channel wall (12) extends change in size continously, and oppositely in relation to one another, over the longitudinal extent of the channel (3), wherein the smallest value of the angle (ε, η) of each oblique surface (11b, 12b) is at least the size of the angle (γ, δ) of the radially outer flank surface (11a, 12a) that adjoins the respective oblique surface (11b, 12b).

2. Vehicle tyre according to Claim 1, **characterized in that** the channel (3) has a tread-outer-side channel end (9) and a tread-inner-side channel end (10), wherein the angle (ε) at which the oblique surface (11b) of the channel wall (11) formed on the respective shoulder-side profile block (4) extends has its greatest value at the tread-outer-side channel end (9).

3. Pneumatic vehicle tyre according to Claim 2, **characterized in that** the tread is of directional design, wherein the tread-outer-side channel end (9) is a leading channel end (9), which meets the ground first when the tyre rolls during forward travel (arrow R), and the tread-inner-side channel end (10) is a trailing channel end (10).

4. Pneumatic vehicle tyre according to one of Claims 1 to 3, **characterized in that** the channel-base channel (13), when seen in plan view, extends rectilinearly based on its channel midline (m_{RG}).

5. Pneumatic vehicle tyre according to one of Claims 1 to 4, **characterized in that** the channel (3) and the channel-base channel (13), when seen in plan view, extend rectilinearly based on their channel midlines (m_{R}, m_{RG}), wherein the channel midline (m_{RG}) of the channel-base channel (13) extends in an inclined manner in the same direction as the channel midline (m_{R}) of the channel (3) in relation to the circumferential direction or in the circumferential direction.

6. Pneumatic vehicle tyre according to Claim 5, **characterized in that**, when seen in plan view and based on their channel midlines (m_{RG}, m_{R}), the channel-base channel (13) and the channel (3) in each case extend at an angle (β, θ) to the circumferential direction, wherein the angle (θ) at which the channel-base channel (13) extends in relation to the circumferential direction is smaller, in particular is smaller by 1° to 10°, preferably by 3° to 5°, than the angle (β) at which the channel (3) extends in relation to the circumferential direction.

7. Pneumatic vehicle tyre according to Claim 5 or 6, **characterized in that** the channel (3), when seen in plan view and based on its channel midline (m_{R}), extends at an angle (β) of 20° to 40°, in particular of 25° to 35°, to the circumferential direction.

8. Pneumatic vehicle tyre according to one of Claims 1 to 7, **characterized in that** the sizes of the angles (ε, η) of the oblique surfaces (11b, 12b) change continuously, that is to say uniformly.

9. Pneumatic vehicle tyre according to one of Claims 1 to 8, **characterized in that** the channel-base channel (13), when seen in a cross section extending perpendicularly to its channel midline (m_{RG}) in plan view, is delimited by a U-shaped channel base (13b) having in each case one mouth edge (13b') at each oblique channel (1), wherein preferably the channel walls (11, 12), at that point where the oblique surfaces (11b, 12b) have the smallest value of their angle (ε, η), are delimited by an in particular rectilinearly extending mouth edge (9a, 10a) which adjoins the mouth edge (13b') of the channel base ( 13b) without any kinks tangentially.

10. Pneumatic vehicle tyre according to one of Claims 1 to 9, **characterized in that** the respective largest values and the respective smallest values of the angles (ε, η) of the oblique surfaces (11b, 12b) correspond.

11. Pneumatic vehicle tyre according to one of Claims 1 to 10, **characterized in that** the channel-base channel (13) has at the radially inner ends of the oblique surfaces (11b, 12b) two delimitation edges (13a) extending rectilinearly in plan view and at a constant distance, determined in a radial direction, from the level of the profile depth (T_{SR}).

12. Pneumatic vehicle tyre according to Claim 11, **characterized in that** the channel-base channel (13) has a constant width (b_{RG}), determined perpendicularly to its channel midline (m_{RG}) in plan view and between the delimitation edges (13a), of 15% to 35%, in particular of 20% to 30%, of the width (b_{R}) of the channel (3).

13. Pneumatic vehicle tyre according to Claim 11 or 12, **characterized in that** the channel-base channel (13) has a constant depth (t_{RG}), based on the delimitation edges (13a) and determined in the radial direction, of 0.30 mm to 1.50 mm, in particular of up to 1.00 mm, preferably of up to 0.75 mm.

14. Pneumatic vehicle tyre according to one of Claims 1 to 13, **characterized in that** the radially outer flank surfaces (11a, 12a) adjoin the oblique surfaces (11b, 12b) at a constant depth (t₁), determined in the radial direction, of 60% to 75% of the maximum depth (t_{R}) of the channel (3).

15. Pneumatic vehicle tyre according to one of Claims 1 to 14, **characterized in that** the channel (3) - when seen in plan view and in each case based on a point (P_{R}) situated centrally on its channel midline (m_{R}) - is at a distance (a_{R}), determined axially on the tread periphery, of 7% to 30%, in particular of 12% to 25%, preferably of 17% to 23%, of the width (B) of the ground contact area of the tread from the nearest lateral boundary of the ground contact area (line L).

## Revendications

1. Pneumatique de véhicule avec une bande de roulement avec au moins une rangée de blocs de profil côté épaulement (4') avec des blocs de profil côté épaulement (4), qui sont séparés les uns des autres par des rainures obliques (1) parallèles entre elles en vue de dessus, réalisées à la profondeur de profil (T_{SR}), et qui sont délimités, du côté intérieur de la bande de roulement, respectivement par une rainure (3) débouchant dans deux rainures obliques (1) successives dans la direction circonférentielle, inclinée en vue de dessus par rapport à la direction circonférentielle en sens inverse des rainures obliques (1), la rainure (3) présentant une largeur (b_{R}) de 3,0 mm à 7,0 mm, une profondeur maximale (t_{R}) de 65 % à 100 % de la profondeur de profil (T_{SR}), des parois de rainure (11, 12) partant de la périphérie de la bande de roulement et une rainure de fond de rainure (13) s'étendant dans sa profondeur maximale (t_{R}), débouchant dans les rainures obliques (1), s'étendant en vue de dessus obliquement à travers la rainure (3),
**caractérisé**
**en ce que** les parois de rainure (11, 12) de la rainure (3), considérées en coupe transversale, se composent sur toute la longueur de la rainure (3) respectivement d'une surface de flanc (11a, 12a) radialement extérieure, s'étendant selon un angle (γ, δ) de 0° à 10° par rapport à la direction radiale, et d'une surface oblique (11b, 12b) qui s'y raccorde, s'étendant vers la rainure de fond de rainure (13) et descendant vers celle-ci, s'étendant selon un angle (ε, η) par rapport à la direction radiale, l'angle (ε) selon lequel s'étend la surface oblique (11b) de l'une des parois de rainure (11) et l'angle (η) selon lequel s'étend la surface oblique (12b) de l'autre paroi de rainure (12) variant de manière continue et opposée l'un par rapport à l'autre sur l'extension longitudinale de la rainure (3), la plus petite valeur de l'angle (ε, η) de chaque surface oblique (11b, 12b) étant au moins égale à la grandeur de l'angle (γ, δ) de la surface de flanc (11a, 12a) radialement extérieure qui se raccorde à la surface oblique respective (11b, 12b).

2. Pneumatique de véhicule selon la revendication 1, **caractérisé en ce que** la rainure (3) présente une extrémité de rainure (9) du côté extérieur de la bande de roulement et une extrémité de rainure (10) du côté intérieur de la bande de roulement, l'angle (ε) selon lequel s'étend la surface oblique (11b) de la paroi de rainure (11) réalisée sur le bloc de profil (4) côté épaulement respectif présentant sa valeur maximale à l'extrémité de rainure (9) du côté extérieur de la bande de roulement.

3. Pneumatique de véhicule selon la revendication 2, **caractérisé en ce que** la bande de roulement est conçue sous forme directionnelle, l'extrémité de rainure (9) côté extérieur de la bande de roulement étant une extrémité de rainure entrante (9) qui entre en premier dans le sol lors du roulement du pneu en marche avant (flèche R), et l'extrémité de rainure (10) côté intérieur de la bande de roulement étant une extrémité de rainure sortante (10).

4. Pneumatique de véhicule selon l'une quelconque des revendications 1 à 3, **caractérisé en ce que** la rainure de fond de rainure (13), considérée en vue de dessus, s'étend de manière rectiligne par rapport à sa ligne centrale de rainure (m_{RG}).

5. Pneumatique de véhicule selon l'une quelconque des revendications 1 à 4, **caractérisé en ce que** la rainure (3) et la rainure de fond de rainure (13), considérées en vue de dessus, s'étendent de manière rectiligne par rapport à leurs lignes centrales de rainure (m_{R}, m_{RG}), la ligne centrale de rainure (m_{RG}) de la rainure de fond de rainure (13) étant inclinée dans la direction circonférentielle ou par rapport à la direction circonférentielle dans le même sens que la ligne centrale de rainure (m_{R}) de la rainure (3).

6. Pneumatique de véhicule selon la revendication 5, **caractérisé en ce que** la rainure de fond de rainure (13) et la rainure (3), considérées en vue de dessus et par rapport à leurs lignes centrales de rainure (m_{RG}, m_{R}), s'étendent respectivement selon un angle (β, θ) par rapport à la direction circonférentielle, l'angle (θ) selon lequel la rainure de fond de rainure (13) s'étend par rapport à la direction circonférentielle étant inférieur, notamment de 1° à 10°, de préférence de 3° à 5°, à l'angle (β) selon lequel la rainure (3) s'étend par rapport à la direction circonférentielle.

7. Pneumatique de véhicule selon la revendication 5 ou 6, **caractérisé en ce que** la rainure (3), considérée en vue de dessus, s'étend par rapport à sa ligne centrale de rainure (m_{R}) selon un angle (β) de 20° à 40°, notamment de 25° à 35°, par rapport à la direction circonférentielle.

8. Pneumatique de véhicule selon l'une quelconque des revendications 1 à 7, **caractérisé en ce que** les grandeurs des angles (ε, η) des surfaces obliques (11b, 12b) varient de manière continue, c'est-à-dire uniforme.

9. Pneumatique de véhicule selon l'une quelconque des revendications 1 à 8, **caractérisé en ce que** la rainure de fond de rainure (13), considérée en coupe transversale en vue de dessus perpendiculaire à sa ligne centrale de rainure (m_{RG}), est délimitée par un fond de rainure en forme de U (13b) avec un bord d'embouchure (13b') au niveau de chaque rainure oblique (1), les parois de rainure (11, 12) étant délimitées à l'endroit où les surfaces obliques (11b, 12b) présentent la plus petite valeur de leur angle (ε, η) par un bord d'embouchure (9a, 10a), s'étendant notamment de manière rectiligne, qui se raccorde tangentiellement sans coude au bord d'embouchure (13b') du fond de rainure (13b).

10. Pneumatique de véhicule selon l'une quelconque des revendications 1 à 9, **caractérisé en ce que** les valeurs maximales et les valeurs minimales des angles (ε, η) des surfaces obliques (11b, 12b) coïncident respectivement.

11. Pneumatique de véhicule selon l'une quelconque des revendications 1 à 10, **caractérisé en ce que** la rainure de fond de rainure (13) présente, aux extrémités radialement intérieures des surfaces obliques (11b, 12b) deux bord de délimitation (13a) s'étendant de manière rectiligne en vue de dessus et s'étendant à une distance constante, déterminée dans la direction radiale, par rapport au niveau de la profondeur de profil (T_{SR}).

12. Pneumatique de véhicule selon la revendication 11, **caractérisé en ce que** la rainure de fond de rainure (13) présente une largeur constante (b_{RG}), déterminée en vue de dessus perpendiculairement à sa ligne centrale de rainure (m_{RG}) et entre les bords de délimitation (13a), de 15 % à 35 %, notamment de 20 % à 30 %, de la largeur (b_{R}) de la rainure (3).

13. Pneumatique de véhicule selon la revendication 11 ou 12, **caractérisé en ce que** la rainure de fond de rainure (13) présente une profondeur constante (t_{RG}), déterminée dans la direction radiale, par rapport aux bords de délimitation (13a), de 0,30 mm à 1,50 mm, notamment de jusqu'à 1,00 mm, de préférence de jusqu'à 0,75 mm.

14. Pneumatique de véhicule selon l'une quelconque des revendications 1 à 13, **caractérisé en ce que** les surfaces de flanc radialement extérieures (11a, 12a) se raccordent aux surfaces obliques (11b, 12b) à une profondeur constante (t₁) déterminée dans la direction radiale, de 60 % à 75 % de la profondeur maximale (t_{R}) de la rainure (3).

15. Pneumatique de véhicule selon l'une quelconque des revendications 1 à 14, **caractérisé en ce que** la rainure (3) - considérée en vue de dessus et respectivement par rapport à un point (P_{R}) situé au centre sur sa ligne centrale de rainure (m_{R}) - par rapport au bord latéral le plus proche de la surface de contact avec le sol (ligne L) une distance (a_{R}) déterminée dans la direction axiale à la périphérie de la bande de roulement, de 7 % à 30 %, notamment de 12 % à 25 %, de préférence de 17 % à 23 %, de la largeur (B) de la surface de contact avec le sol de la bande de roulement.
